# EUROPÄISCHE PATENTSCHRIFT

(11) **EP 4 142 547 B1**
(45) Veröffentlichungstag und Bekanntmachung des Hinweises auf die Patenterteilung: **17.04.2024**
(21) Anmeldenummer: 21728154.2
(22) Anmeldetag: 29.04.2021
(51) Int. Cl.: A47F 5/11, A47F 5/16, A47F 7/00, H01M 8/00

(54) **PRÄSENTATIONSSYSTEM**
PRESENTATION SYSTEM
SYSTÈME DE PRÉSENTATION

(30) Priorität: 30.04.2020 AT 5009220 U
(43) Veröffentlichungstag der Anmeldung: 08.03.2023
(73) Patentinhaber: Leisch Beratungs- und Beteiligungs-GmbH, 4040 Linz (AT)
(72) Erfinder: LEISCH, Franz, 4040 Linz (AT)
(74) Vertreter: Burger, Hannes
(86) Internationale Anmeldenummer: PCT/AT2021/060151
(87) Internationale Veröffentlichungsnummer: WO 2021/217194

(56) Entgegenhaltungen:
- EP-B1- 3 099 205
- DE-U1- 29 811 802
- FR-A3- 2 967 338
- US-A- 1 413 483
- US-A- 3 481 484
- US-A1- 2003 057 170

## Beschreibung

Die Erfindung betrifft ein Präsentationssystem umfassend ein Trägersystem und zumindest ein Präsentationselement, wobei das Trägersystem einen faltbaren Trägerring mit Seitenwänden aus Platten, insbesondere Stegplatten, mit einem Boden- und Deckelbereich sowie zumindest einen Faltbereich und zumindest ein Stabilisierungselement, das rahmenartig ausgebildet ist, umfasst, und das Stabilisierungselement auf den Seitenwänden des faltbaren Trägerrings im Boden- und/oder im Deckelbereich angeordnet ist, wobei das Stabilisierungselement des Trägersystems einen Vorsprung zur Halterung des zumindest einen Präsentationselements aufweist.

In Einkaufsmärkten wird die Ware meist in fix montierten Regalen präsentiert. Bei Aktionsware oder häufig wechselndem Sortiment wie Obst und Gemüse wird die Ware häufig auf Inseln platziert. Die Zweitplatzierung von Obst und Gemüse bzw. Waren in Transport- und Präsentationsbehältern erfolgt oft auf sogenannten Präsentationsinseln. Als Unterbau werden häufig klappbare Obst- und Gemüseboxen gleicher Bauart verwendet. Dies passiert vor allem in großen Hypermärkten. Diese Klappboxen sind eine günstige Alternative zu massiven Unterbauten aus Holz oder Metall. Es kommen aber auch übereinandergestapelte Paletten als Unterbau zum Einsatz.

Oft werden bis zu sechs Klappboxen im Stapel verwendet. Ist dann auch noch eine Schrägstellung der Präsentationsboxen im Regal gewünscht, werden sogar bis zu sieben oder acht Klappboxen je Stapel verwendet.

Für die Poolbetreiber solcher Klappboxen bedeuten diese zweckentfremdeten Klappboxen allerdings eine ineffiziente Kapitalbindung ohne Return of invest. Es kommen aber auch schwere und wenig mobile bzw. teure Inseln aus Holz oder Metall bzw. eine Kombination von beidem zum Einsatz.

Die EP 3 099 205 B1 der Anmelderin beschreibt ein Präsentationssystem umfassend ein Trägersystem und gegebenenfalls zumindest einen Transport- und Präsentationsbehälter, insbesondere gegebenenfalls klappbaren Obst- und Gemüsebehälter, wobei das Trägersystem einen faltbaren Trägerring mit Seitenwänden aus Platten, insbesondere Stegplatten, mit einem Boden- und Deckelbereich so-wie mit zumindest einem Faltbereich und zumindest ein Stabilisierungselement umfasst, wobei das zumindest eine Stabilisierungselement zumindest eine Fixierungsvorrichtung aufweist, durch welche das Stabilisierungselement mit der Seitenwand des faltbaren Trägerrings im Boden- und/oder im Deckelbereich fixierbar ist, und das Stabilisierungselement des Trägersystems den gegebenenfalls zumindest einen Transport- und Präsentationsbehälter trägt, wobei das Stabilisierungselement als Rahmen ausgebildet ist, der zumindest einen Vorsprung zur Halterung des Transport- und Präsentationsbehälters, Stege zur Erhöhung der Stabilität des Rahmens und des Trägerrings und Durchbrüche aufweist.

Abhängig von der zu präsentierenden Ware, ist es wichtig geeignete Behältnisse zu verwenden, um eine Beschädigung der Waren zu verhindern. Da Bananen sehr druckempfindlich sind, ist deren Präsentation eine besondere Herausforderung. Für Bananen werden daher am häufigsten Bananenschachteln verwendet, deren Karton eine hohe Steifigkeit aufweist.

Aus dem Stand der Technik sind auch Mehrwegbehälter bekannt, die eine spezielle Geometrie aufweisen, um Bananen zu schützen. Die EP 1 167 228 B1 beschreibt eine Verpackung für verderbliche Nahrungsmittel, wie beispielsweise Bananen, umfassend eine äußere starre Schale und eine innere flexible Hülle, die in der starren Schale positioniert und dazu bestimmt ist, die Nahrungsmittel aufzunehmen.

Die FR2967338A3 beschreibt einen Werbetisch mit einem faltbaren Ring, in dem ein Innenrahmen angeordnet ist, der eine Gitterform aufweist, die dem erfindungsgemäßen Werbetisch eine ideale Stabilität und Widerstandsfähigkeit verleiht. Auf dem Innenrahmen ist eine Abdeckung platziert, die einen Rand/Flansch aufweist. Dabei weisen der Ring sowie die Abdeckung Öffnungen zur Verbindung auf, um auf diese Weise die Stabilität des Werbetisches nochmals zu verbessern. Es wird eine treppenförmige Ablagefläche, die auf der Abdeckung angeordnet ist, gezeigt.

Durch die sensible Ware kann meist nur eine geringe Menge für den Konsumenten ansprechend präsentiert werden.

Aufgabe der vorliegenden Erfindung ist es daher die Präsentationsfläche zu vergrößern.

Die Aufgabe der vorliegenden Erfindung wird durch ein Präsentationssystem gemäß den Ansprüchen gelöst.

Das erfindungsgemäße Präsentationssystem umfasst ein Trägersystem und zumindest ein Präsentationselement, wobei das Trägersystem einen faltbaren Trägerring mit Seitenwänden aus Platten, insbesondere Stegplatten, mit einem Boden- und Deckelbereich sowie zumindest einen Faltbereich und zumindest ein Stabilisierungselement, das rahmenartig ausgebildet ist, wobei das Stabilisierungselement auf den Seitenwänden des faltbaren Trägerrings im Boden- und/oder im Deckelbereich angeordnet ist, und das Stabilisierungselement des Trägersystems einen Vorsprung zur Halterung des zumindest einen Präsentationselements aufweist. Vorteilhaft erweist sich, dass auf dem Stabilisierungselement zumindest zwei Präsentationselemente angeordnet sind, die in einem Winkel von kleiner 180° angeordnet und miteinander verbunden sind, wodurch eine größere Menge an Ware für die Konsumenten ansprechend präsentiert werden kann. Dies hat den Vorteil, dass nicht ständig die Ware auf dem Präsentationssystem von einer Person kontrolliert bzw. nachgefüllt werden muss.

Die zumindest zwei Präsentationselemente sind annähernd einander gegenüberliegend angeordnet, wodurch eine ausriechende Stabilität bei gleichzeitiger Verdoppelung der Präsentationsfläche erzielt wird.

Der Winkel ist aus einem Bereich mit einer oberen Grenze von 150° und einer unteren Grenze von 40° ausgewählt, wodurch die Ware nicht zusätzlich an den Präsentationselementen befestigt werden muss und somit gewährleistet wird, dass die Ware nicht von den Präsentationselementen stürzt.

Besonders vorteilhaft erweist sich, dass der Winkel annähernd 80° beträgt, weil dadurch einerseits die Ware für einen durchschnittlich großen Erwachsenen in einer optimalen Höhe präsentiert wird und andererseits dennoch die Ware selbsttätig im Regal verbleibt.

Von Vorteil erweist sich, dass die zumindest zwei Präsentationselemente verbunden sind, wodurch eine sehr gute Stabilität der Präsentationselement erreicht wird.

Die Verbindung der zumindest zwei Präsentationselemente erfolgt über ein Verbindungselement, wodurch die Stabilität erhöht werden kann.

In einer Ausführungsform ist vorgesehen, dass das Verbindungselement eine annähernd dreieckige Form aufweist, womit zusätzliche Fläche vorhanden ist um beispielsweise Werbebotschaften, Preisankündigungen, etc. zu platzieren.

In einer Weiterbildung des Präsentationssystem kann das zumindest eine Verbindungselement im Randbereich Vorsprünge, insbesondere annähernd pilzförmige Vorsprünge, zur Verbindung mit komplementären Ausnehmungen des zumindest einen Präsentationselement 3 aufweisen oder umgekehrt, wodurch neben der Verbindung auch zugleich eine Positionierung der beiden Teile, Verbindungselement zu Präsentationselement, erfolgen kann.

Die Präsentationselemente sind, gegebenenfalls mit dem Verbindungselement und/oder Stabilisierungselement, mit Verbindungsmitteln ausgewählt aus einer Gruppe umfassend Schraube, Stift, Klemme, Niet, Splint, Pin, Haken, Clips, Riegel, Spreizverbindungselement, Klettverschluss verbunden, wodurch ein Verrutschen der Präsentationselemente verhindert wird und somit ein unbeabsichtigtes Entladen der Präsentationselemente vermieden werden kann.

Erfindungsgemäß ist vorgesehen, dass das zumindest eine Präsentationselement durch zumindest einen Halbschalenträger gebildet ist, wodurch es ermöglicht wird runde bzw. halbrunde Waren, insbesondere Gemüse und Obst, wie beispielsweise Bananen, platzsparend und dennoch schonend zu präsentieren.

In einer Weiterbildung ist vorgesehen, dass mehrere nebeneinander angeordnete Halbschalenträger ein Präsentationselement bilden, wodurch die Präsentationselemente für die Anpreisung von Rundungen aufweisenden Gegenständen, wie Bananen oder andere Früchte, Obst bzw. Gemüse besonders gut geeignet sind.

In einer bevorzugten Ausführungsform weist das Präsentationselement mit Halbschalen einen Randbereich mit einer Abschrägung auf, wodurch es ermöglicht wird, dass zwei einander gegenüberliegende Präsentationselemente ineinandergesteckt werden können.

Dadurch dass zwei einander gegenüberliegende Präsentationselemente mit Halbschalen im Randbereich mit der Abschrägung ineinandergesteckt sind, wird einerseits das Präsentationssystem im Bereich der Spitze stabilisiert und andererseits entsteht auch eine Fläche, auf welcher Preis- oder Werbeinformationen angebracht werden können.

Bei einer Ausführungsform können im zumindest einen Halbschalenträger Durchbrüche angeordnet sein, wodurch die in den Halbschalen präsentierte Ware länger haltbar bleibt, weil das Schwitzwasser der Früchte bzw. des Gemüses abfließen kann.

Zum besseren Verständnis der Erfindung wird diese anhand der nachfolgenden Figuren näher erläutert.

Es zeigen jeweils in stark vereinfachter, schematischer Darstellung:
- Fig. 1: schematische Darstellung der perspektivischen Ansicht eines Präsentationssystems mit einem Stabilisierungselement mit zwei Präsentationselementen;
- Fig. 2: schematische Darstellung einer Frontansicht eines Präsentationssystems mit einem Stabilisierungselement mit zwei Präsentationselementen;
- Fig. 3: schematische Darstellung einer Seitenansicht eines Präsentationselements mit Halbschalen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Das Präsentationssystem 1 umfasst ein Trägersystem 2 sowie zumindest ein Präsentationselement 3. Das Trägersystem 2 wird von einem faltbaren Trägerring 4 mit vier Seitenwänden 5 aus Platten, insbesondere Stegplatten, mit einem Boden- und Deckelbereich 6, 7 sowie mit zumindest einem Faltbereich 8 und zumindest einem Stabilisierungselement 9 gebildet. Der Trägerring 4 bildet die Basis für das Präsentationssystem 1. Zur Interaktion des Trägerrings 4 mit dem Stabilisierungselement 9 kann eine Fixierungsvorrichtung am Stabilisierungselement 9 angeordnet sein. Die Fixierungsvorrichtung verbindet das Stabilisierungselement 9 mit der Seitenwand 5 des faltbaren Trägerrings 4.

Der faltbare Trägerring 4 dient als Unterbau im Trägersystem 2 auf den das Stabilisierungselement 9 gesetzt wird. Das Stabilisierungselement 9 trägt und gegebenenfalls fixiert das Präsentationselement 3.

Das Stabilisierungselement 9 dient einerseits zur Stabilisierung des Trägerrings 4 im Bodenbereich 6 oder Deckelbereich 7 oder sowohl im Boden- als auch im Deckelbereich 6,7 und/oder andererseits zur Halterung des Präsentationselements 3. Die Stabilisierung erfolgt mittels Fixierungsvorrichtung des Stabilisierungselements 9 im Deckelbeich 7 und/oder Bodenbereich 6. Die Halterung Präsentationselements 3 im Deckelbeich 7 erfolgt mittels zumindest eines Vorsprungs 10 des Stabilisierungselements 9. Der Vorsprung 10 kann auch als Stapelrand ausgebildet sein, der entweder umlaufend oder nur bereichsweise vorhanden ist.

Der zumindest eine Vorsprung 10 kann einstückig mit dem Stabilisierungselement 9 hergestellt sein. In einer alternativen Ausführungsform sind die Vorsprünge 10 separate Bauteile und werden mit dem Stabilisierungselement 9 verbunden. Die Verbindung kann durch nieten, schrauben, nageln, kleben bzw. durch andere aus dem Stand der Technik bekannte Methoden erfolgen.

Der zumindest eine Vorsprung 10 kann sowohl bündig als auch versetzt auf dem Stabilisierungselement 9 angeordnet sein. Erfolgt eine bündige Anordnung mit dem Stabilisierungselement 9, so liegen die nach außen gewandten Flächen auf einer Ebene mit den Außenflächen des Rahmens des Stabilisierungselements 9.

Werden mehrere Stabilisierungselemente 9 übereinander angeordnet, erweist es sich von Vorteil, dass die Vorsprünge 10 nach innen versetzt angeordnet sind, um zu ermöglichen, dass die Außenflächen der verschiedenen Stabilisierungselemente 9 ebenfalls auf einer Ebene liegen. Dies ist sowohl aus hygienischen Gründen als auch optisch von Vorteil ist.

In bzw. auf diesen Stabilisierungselementen 9 wird das Präsentationselement 3, positioniert, welches ein Transport- und Präsentationsbehälter, wie eine Mehrwegklappbox aus Kunststoff, eine Karton- oder auch Holzbox, ein Halbschalenträger, insbesondere Bananentray, oder ein Behältnis allgemein, welches zur Präsentation von Waren geeignet ist, sein kann. In diesem Präsentationselement 3 wird beispielsweise Obst und Gemüse präsentiert.

In dieses Stabilisierungselement 9 können auch Vorrichtungen wie sie in der WO 2011/072317 A1 und WO 2012/106741 A1 beschrieben werden, platziert werden. Auf diesen Vorrichtungen wird wiederum das Präsentationselement 3 gesetzt.

Dieses mobile Präsentationssystem 1 kann aber auch in anderen Bereichen, also nicht nur für Obst und Gemüsepräsentationen eingesetzt werden. Sollte dafür das Stabilisierungselement 9 anders strukturiert werden müssen, wie beispielsweise ein anderer Stapelrand, wie er durch den zumindest einen Vorsprung 10 gebildet wird, oder kein Stapelrand, sondern nur glatter Boden mit Rutschstopp, gegebenenfalls nur im unteren Bereich bei geneigten Regalen, etc. kann dies wie bei der Erfindung beschrieben erfolgen.

Vorzugsweise ist das Stabilisierungselement 9 als Rahmen 11 ausgebildet. Der Rahmen 11 kann zur Erhöhung der eigenen Stabilität und auch zur Erhöhung der Stabilität des Trägerrings 4 Stege aufweisen. Ist das Stabilisierungselement 9 als Rahmen 11 ausbildet kann dieser Durchbrüche aufweisen oder geschlossen sein. Auch ein im Stabilisierungselement 9 angeordnetes plattenförmiges Element kann die Stabilität des Stabilisierungselement 9 erhöhen.

Das Stabilisierungselement 9 kann auch als Hohlkammerprofil ausgebildet sein.

In einer alternativen Ausführungsform kann das Stabilisierungselement 9 auch vollflächig ausgebildet sein. Hierbei kann der Boden des Stabilisierungselements 9 auf einer Ebene liegen oder auch zumindest eine Vertiefung aufweisen.

Die Stege können unterschiedliche Formen aufweisen. Beispielsweise können sie einen rechteckigen, quadratischen, L-förmigen, T-förmigen, C-förmigen, U-förmigen, V-förmigen Querschnitt oder dergleichen aufweisen. Die Stege ermöglichen auch eine möglichst große Lastabtragung.

Die Stege können auch an unterschiedlichen Positionen des Stabilisierungselements 9 angeordnet sein. Beispielseise können ein Mittelsteg und jeweils ein Seitensteg angeordnet sein. Die Stege können somit als Schienensystem für Präsentationselemente 3, insbesondere Transport- und Präsentationsbehälter, dienen. Vor allem bei der Bevorratung von Transport- und Präsentationsbehältem im öffenbaren Trägerring 4 kann so auf einfache Weise der Transport- und Präsentationsbehälter hinein- bzw. hinausgeschoben werden.

Auf den Stegen und am Rahmen des Stabilisierungselements 9 können optional Rippen angebracht, die zur Fixierung des Präsentationselements 3 dienen, die sich nicht über die gesamte Breite des Stabilisierungselements 9 erstrecken. Solche Rippen können an beliebigen Positionen im Stabilisierungselement 9 angeordnet sein, um eine Fixierung des Präsentationselements 3 beliebiger Größe und/oder in einem beliebigen Winkel zu ermöglichen. Die Rippen können auch beweglich ausgebildet sein, indem sie beispielsweise in einer in einem Steg vorgesehenen Öffnung, wie Langloch, verschiebbar sind. Die Beweglichkeit der Rippen kann auch dadurch erreicht werden, dass sie aus den Stegen herausnehmbar ausgebildet sind. So können beispielsweise die Rippen in Stegen vorgesehene Löcher, die in regelmäßigen Abständen angeordnet sind, eingesteckt werden. So kann die Variabilität der Halterung für Präsentationselemente 3 unterschiedlicher Größe gesteigert werden.

Das Stabilisierungselement 9 wird in bzw. auf den Trägerring 4 ein- bzw. aufgesetzt, um dem Trägerring 4 dadurch eine höhere Stabilität zu verleihen, weil ein Zusammenfalten verhindert wird.

Die Fläche des Stabilisierungselements 9 entspricht im Wesentlichen zumindest annähernd oder ist gleich der Fläche des faltbaren Trägerrings 4 im aufgefalteten Zustand, wobei in einer bevorzugten Ausführungsform die Länge und Breite des Trägerrings 4 am Außenumfang eine geringfügig kleinere Abmessung als die Länge und Breite des Stabilisierungselements 9 aufweist, weil der Trägerring 4 in die U-förmige Fixierungsvorrichtung des Stabilisierungselements 9 gesteckt wird. Bei einer annähernd gleichen Abmessung sind die Länge und Breite des Stabilisierungselements 9 maximal um 0,1 cm bis 10 cm, vorzugsweise 1 cm, größer als die Länge und Breite des Trägerrings 4.

Am Stabilisierungselement 9 können zusätzlich zur zumindest einen Fixierungsvorrichtung und zum Vorsprung 10 auch Elemente, wie Löcher, Ausnehmungen oder Erhebungen vorgesehen sein, die eine Anordnung von Rollen 12 oder Füßen am Stabilisierungselement 9 ermöglichen.

Wie bereits erwähnt kann das Stabilisierungselement 9 sowohl im Deckelbereich 7 als auch im Bodenbereich 6 des Trägerrings 4 angeordnet sein. Wird das Stabilisierungselement 9 im Deckelbereich angebracht sind die Vorsprünge 10 in Richtung der zu präsentierenden Präsentationselemente 3 angeordnet und die Fixierungsvorrichtung in Richtung des Trägerrings 4. Wird das Stabilisierungselement 9 hingegen im Bodenbereich 6 angebracht wird dieses um 180° gedreht und die Vorsprünge 10 können zur Abstützung am Boden dienen und die Fixierungsvorrichtung ist in Richtung des Trägerrings 4 allerdings im Bodenbereich 6 des Trägerrings 4 angeordnet und dient zur Fixierung und Stabilisierung des Trägerrings 4. Die Vorsprünge 10 sind nicht unbedingt notwendig, wenn sie am Bodenrahmen angebracht sind. Sie können auch weggelassen werden (durch Einsätze im Werkzeug), weil die Präsentationsinsel meist auf Rollen oder Füßen steht.

Ferner kann beispielsweise in der Seitenwand 5 des Trägerrings 4 zumindest eine Ausnehmung angeordnet sein. Diese Ausnehmung kann nur an einer, zwei, drei oder allen vier Seitenwänden des Trägerrings 4 angeordnet sein.

Die Ausnehmung kann als Grifföffnung ausgebildet sein oder zum Anbringen eines Griffes dienen, wodurch das gesamte mobile Präsentationssystem 1 auch bei Bedarf getragen werden kann.

Eine weitere Ausnehmung kann in Form einer Aussparung im Bodenbereich 6 der Seitenwand 5 des Trägerrings 4 angeordnet sein und so ermöglichen, dass ein unbeabsichtigtes Zusammenfalten des Trägerrings 4 durch Berührung mit den Füßen verhindert wird.

Die Ausnehmungen im Trägerring 4 können auch als Öffnungen zum Entweichen von Luft dienen, sofern der Raum innerhalb des Trägerrings 4 als Lagerraum verwendet wird. Insbesondere wenn der durch den Trägerring 4 gebildete Lagerraum gekühlt wird kann durch diese Öffnungen warme Luft entweichen.

Zudem können an zumindest einer Seitenwand 5 des Trägerrings 4 auch Zusatzelemente, wie Informationsschilder oder Halterungen für Produkt-, Preis- oder Werbeinformation angeordnet sein. Ein solches Zusatzelement kann beispielsweise eine aufgeklebte oder angeschraubte Etikettenhalterung aus Kunststoff für Preis- oder Produktinformationen sein.

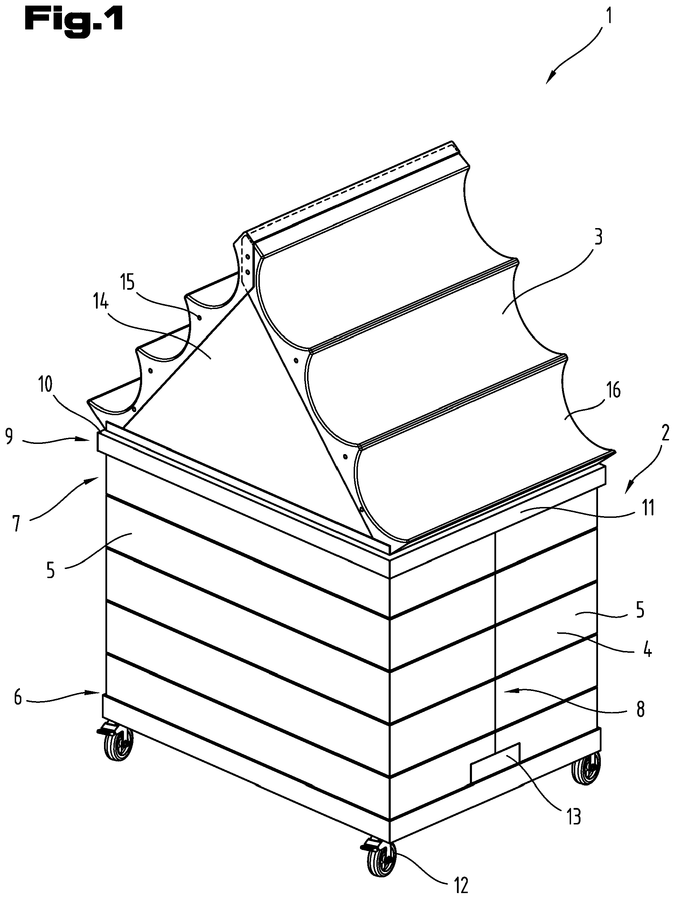

In einer Weiterbildung kann im Bodenbereich 6 der Seitenwand 5 des Trägerrings 4 im Faltbereich 8 wie in Fig. 1 dargestellt oder im Deckelbereich 7 (nicht dargestellt) ein Verriegelungselement angeordnet sein.

Um ein Entfalten des Trägerrings 4 zu verhindern, kann ein Klettverschluss an der Innenseite des Trägerrings 4 angeordnet sein. So sind auf jeweils gegenüberliegenden Seitenwänden 5 des Trägerrings 4 jeweils ein Klettband mit Widerhaken und ein Klettband mit Schlaufen angebracht, damit der Trägerring 4 nach dem Falten nicht auseinanderspringt.

Das Stabilisierungselement 9 weist annähernd gerade Seitenwände auf.

Zudem kann das Stabilisierungselement 9 sowohl im Boden- als auch im Deckelbereich 6, 7 angeordnet werden. Im Bodenbereich 6 dient das Stabilisierungselement 9 zur Stabilisierung des Trägerrings 4 bzw. kann auch zum Tragen des Trägerrings 4 verwendet werden. Im Deckelbereich 7 dient das Stabilisierungselement neben der Stabilisierung des Trägerrings auch zum Tragen zumindest eines Präsentationselements 3. Wird das Stabilisierungselement 9 im Bodenbereich 6 angeordnet wird es um 180 ° gedreht, damit die Fixierungsvorrichtung wieder mit dem Trägerring 4 des Trägersystems 2 interagiert. Ferner kann das Stabilisierungselement 9 mit gerader Seitenwand auch eine Basis für ein weiteres Stabilisierungselement 9 mit gerader Seitenwand sein.

In einer Weiterbildung kann zumindest eine Seitenwand 5 des Trägerrings 4 öffenbar ausgebildet sein. So kann beispielsweise durch eine horizontale oder vertikale Anordnung eines Filmscharniers eine Seitenwand 5 zumindest bereichsweise öffenbar sein, um beispielsweise Produkte, wie z.B. Obst und Gemüse, andere Verkaufsartikel, weitere Präsentationselemente 3 für eine rasche Nachbestückung innerhalb des Trägerrings 4, der als Faltrahmens ausgebildet ist, zu lagern.

Um die Mobilität des Präsentationssystems 1 zu erhöhen können wie bereits erwähnt am Stabilisierungselement 9 Rollen 12, insbesondere drehbare Rollen 25, angeordnet sein. Die Rollen 12 weisen vorzugsweise eine Bremsfunktion auf, damit das Präsentationssystem 1 nicht unbeabsichtigt verschoben wird. Es können aber auch nicht lenkbare Rollen 12, insbesondere Bockrollen, bzw. eine Mischung aus Bock- und Lenkrollen, eingebaut sein. In der Regel wird mindestens eine dieser Rollen 12 einen Bremsmechanismus aufweisen, um das Präsentationssystem 1 vor allem auf schiefen Ebenen vor dem Wegrollen zu schützen.

Die Vorsprünge 10 im Eckbereich des Stabilisierungselements 9 können ausgespart werden, wodurch die Vorsprünge 10 nicht umlaufend ausgebildet sind.

Die Ausbildung einer Öffnung, insbesondere Lochs, im Eckbereich des Stabilisierungsrahmens 9 im Deckelbereich 7 ermöglicht ein Verbindungselement, wie z.B. Verbindungsklammer, Splint, etc., anzuordnen, um mehrere Präsentationssysteme 1 stabil zu einer gemeinsamen Insel verbinden zu können. Die Öffnung kann allerdings auch entlang der Schmal- und/oder Längsseite des Stabilisierungselements 9 im Rahmen 11 oder im Stabilisierungselement 9 im Bodenbereich 6 angeordnet sein.

Es kann auch ein horizontales Filmscharnier im Mittenbereich einer Seitenwand 5 angeordnet sein und der untere Bereich dieser Seitenwand 5 öffenbar ausgebildet sein, indem die Verbindung mit den benachbarten Seitenwänden 5 unterbrochen ist. Somit kann der untere Teil der Seitenwand 5 nach oben geklappt werden, wodurch im Trägerring 4 ein Stauraum entsteht. Um ein Offenstehen des Trägerrings 4 zu gewährleisten kann ein Halteelement, wie z.B. Riegel, Klettverschluss, Haken oder dergleichen angeordnet sein. Vorzugsweise zumindest eine Längsseitenwand 5 des Trägerrings 4 kann bis zur halben Höhe seitlich geschlitzt werden damit diese wie eine Öffnungsklappe nach oben geklappt werden kann. Diese Klappe kann z.B. mit Klettverschlüssen versehen werden, damit die geöffnete Klappe im oberen Bereich des mobilen Präsentationssystems 1 fixiert werden kann und auch im geschlossenen Zustand z.B. am Stabilisierungselement 9 im Bodenbereich 6 fixiert werden kann.

Auch eine vertikale Anordnung von Filmscharnieren ist möglich, wodurch ebenfalls der Innenraum des Trägerrings 4 zugänglich wird. Hierbei ist jeweils links und rechts ein Filmscharnier angeordnet und die Klappen sind doppelflügelig ausgebildet. Selbstverständlich kann auch nur ein Filmscharnier mit einer Klappe oder mehr als zwei Filmscharniere angeordnet sein. Um die Präsentationshöhe im Innenraum des Trägerrings 4 zu erhöhen kann beispielsweise ein Podest im Trägerring 4 platziert werden.

In einer Weiterbildung des Präsentationssystems 1 kann im zugänglichen Innenraum des Trägerrings 4 auch ein Regal bzw. Podest, insbesondere Displayregal, angeordnet sein. Auf diesem Displayregal können zusätzliche Artikel platziert werden, um den Platz des Präsentationssystems 1 optimal zu nutzen. Dazu wird der Trägerring 4, vorzugsweise Kartonring, an der Vorderseite, welche meist die Präsentationsseite bildet, mittels einer Perforation so geöffnet, dass der ausgeschnittene Bereich des Kartons wie eine Doppelflügeltüre nach innen geöffnet werden kann. Die Höhe und Breite der Türen kann dabei beliebig gewählt werden.

Das Stabilisierungselement 9 im Deckelbereich kann zumindest eine Führung, wie Einsteckvorrichtung für Informationstafeln aufweisen.

Beim erfindungsgemäßen Präsentationssystem 1 wird ein Stabilisierungselement 9 auf den Trägerring 4 gesetzt und zumindest zwei Präsentationselemente 3 einander gegenüberliegend auf dem Stabilisierungselement 9 angeordnet. Die zwei Präsentationselemente 3 sind in einem Winkel kleiner 180° einander gegenüberliegend angeordnet.

In Fig. 1 ist das erfindungsgemäße Präsentationssystem 1 dargestellt. Dabei werden auf einem Stabilisierungselement 9, das auf das Trägersystem 2 gesetzt wird, zwei Präsentationselemente 3 in einem Winkel von annähernd 80° zueinander platziert.

In alternativen nicht dargestellten Ausführungsformen kann der Winkel auch annähernd 70°, 60° oder 50° betragen, je nachdem mit welcher Neigung die Ware präsentiert werden soll. Aber es sind auch Winkel von 90°, 100°, 110°, 120°, 130° oder 140° möglich, wobei die Waren in einem sehr geringen Neigungswinkel präsentiert werden und somit sehr flach liegen.

Die beiden Präsentationselemente 3 können nur an den sich gegenseitig berührenden Stellen und gegebenenfalls auch mit dem Stabilisierungselement 9 verbunden sein.

Wie in Fig. 1 dargestellt sind die beiden Präsentationselemente 3 über ein Verbindungselement 14 verbunden sein. Dieses Verbindungselement 14 weist, wie in der Abbildung gezeigt, vorzugsweise eine annähernd dreieckige Form auf, wodurch die Stabilität erhöht wird. Die dreieckige Form des Verbindungselement 14 bildet vorzugsweise ein gleichschenkeliges, spitzwinkeliges Dreieck.

Das Verbindungselement 14 kann aus Karton, Kunststoff oder auch Meshgewebe gebildet sein. Es kann auch als Stegplatte oder aus geschäumten Kunststoff ausgebildet sein.

Auf diesem Verbindungselement 14 können Hinweise, wie Werbebotschaften, Preisankündigungen oder dergleichen oder unterschiedliche Muster und Designs angebracht sein.

Das dargestellte Verbindungselement 14 ist einteilig ausgeführt. In nicht dargestellten Ausführungsformen kann es auch mehrteilig oder mit einem Gelenk, insbesondere Filmscharnier, ausgebildet sein.

Die beiden Präsentationselemente 3 können aber auch mit annähernd nur stab- bzw. stegförmigen Elementen miteinander verbunden werden, wodurch bereits ein gewisses Maß an Stabilität des Präsentationssystems 1 erzielt wird. Diese stab- bzw. stegförmigen Elemente können wiederum gelenkig ausgebildet sein, um eine platzsparende Lagerung zu ermöglichen.

Die Verbindung zwischen den Präsentationselementen 3 und dem Verbindungselement 14 bzw. dem Stabilisierungselement 9 kann mit Verbindungsmitteln 15 ausgewählt aus einer Gruppe umfassend Schraube, Stift, Klemme, Niet, Haken, Riegel, Spreizverbindungselement und Klettverschluss verbunden werden. Vorzugsweise erfolgt die Verbindung mit einem Klettverschluss. Die Verbindung kann nur einer Stelle oder auch an mehreren Stellen erfolgen. Vorteilhaft erweist sich, wenn der Hakenteil bzw. Schlaufenteil am annähernd dreieckigen, gleichschenkeligen, spitzwinkeligen Verbindungselement 14 im Bereich der Schenkel und der Schlaufenteil bzw. Hakenteil am Präsentationselement 3 an jenem Bereich angebracht ist, der dem dreieckigen Verbindungselement 14 zugewandt ist, oder umgekehrt.

Zusätzlich zur Klettverbindung kann auch eine Verbindung im Eckbereich des Verbindungselements 14 mit dem Präsentationselement 3 erfolgen. Diese Verbindung dient gleichzeitig auch als Positionierungshilfe des Verbindungselement 14 in Bezug auf die Präsentationselemente 3, welche vorzugsweise durch ein Spreizverbindungselement erfolgt. Durch diese Positionierungshilfe, die beispielsweise auch als Clips ausgeführt sein kann, wird auch die Stellbreite der beiden Präsentationselemente 3 auf dem Stabilisierungselement 9 der Präsentationsinsel bestimmt.

Erfolgt die Verbindung des Verbindungselements 14 mit dem Präsentationselement 3 über zumindest einen pilzähnlichen Vorsprung so kann die Verbindung ebenfalls sowohl in den Eckbereichen als auch entlang der Kanten des Verbindungselements 14, gegebenenfalls am Schenkel des dreieckigen Verbindungselements 14, erfolgen oder nur an einer der beiden genannten Optionen erfolgen.

Wie dargestellt ist das Präsentationselement 3 vorzugsweise als Halbschalenträger 16 ausgebildet, wobei mehrere Halbschalenträger 16 nebeneinander angeordnet sein können. Solche Halbschalenträger werden auch oft als Bananentray, Bananenliege bzw. Bananentreppe bezeichnet. In diesen Halbschalen können beispielsweise Bananen gelagert werden, weil sich die Krümmung der Banane in die Halbschalenform einfügt.

In einer Weiterbildung ist es möglich, dass die Halbschalen Durchbrüche aufweisen, wodurch beispielsweise Schwitzwasser ablaufen kann und somit die Haltbarkeit der Früchte, insbesondere Bananen, nicht beeinträchtigt wird.

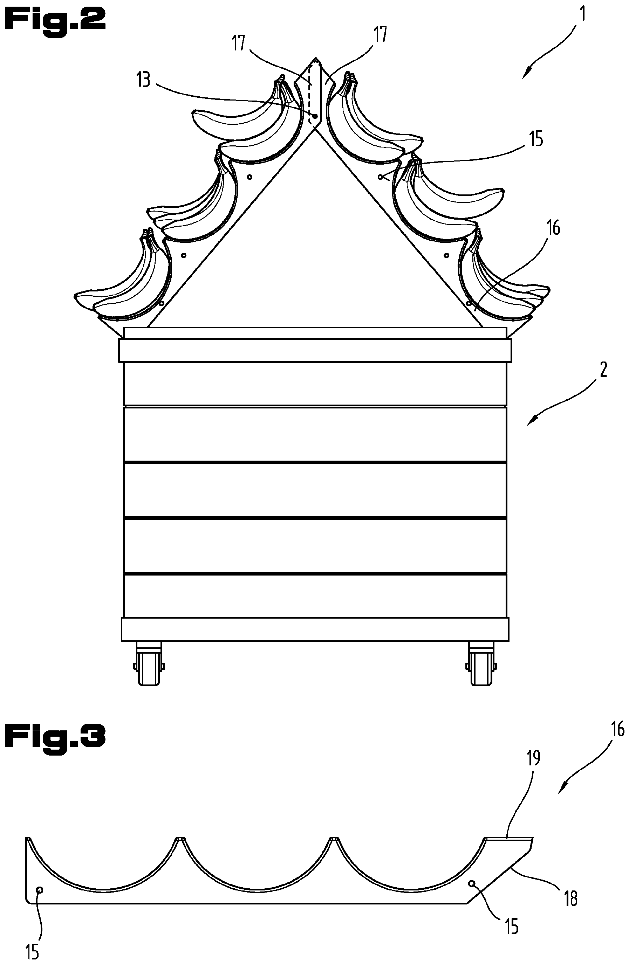

In Fig. 2 wird das erfindungsgemäße Präsentationssystem 1 mit der zu präsentierenden Ware, nämlich Bananen, dargestellt. Dabei sind die beiden halbschalenförmigen Präsentationselemente 16 an den beiden stirnseitigen Randbereichen 17 jeweils untereinander und an den längsseitigen Randbereichen jeweils mit dem annähernd dreieckigen Verbindungselement 14 mit Verbindungsmitteln 15 verbunden.

In Fig. 3 ist ein erfindungsgemäßes Präsentationselement 3 dargestellt, wobei an jenem mit dem anderen Präsentationselement 3 zu verbindenden Randbereich 17 eine Abschrägung 18 vorliegt. Dabei erstreckt sich die Abschrägung 18 vorzugsweise nur über einen Teil des Randbereichs 17.

Durch diese Abschrägung 18 können zwei miteinander zu verbindende Präsentationselemente 3 zusammengesteckt werden. Eine geringfügig verformbare bzw. leicht flexible Ausbildung des Präsentationselements 3 ermöglicht das Ineinanderstecken der zwei Präsentationselemente 3 im Randbereich 17. Der Randbereich 17 des einen Präsentationselements 3 ist sozusagen im Randbereich 17 des anderen Präsentationselements 3 gefangen.

Um diese Steckverbindung der Präsentationselemente 3 im Randbereich 17 zu stabilisieren wird am ersten Präsentationselement 3 im Randbereich 17 eine Ausnehmung und am anderen zu verbindenden Präsentationselement 3 im Randbereich 17 ein Verriegelungselement 13 angeordnet. Dieser Verriegelungsmechanismus kann mit einfachen aus dem Stand der Technik bekannten Verbindungsmitteln 15 gebildet sein, wie zum Beispiel ein Durchbruch, in den ein Vorsprung, wie beispielsweise Schraubmutter, passt und einschnappt. Vorzugsweise werden Verbindungsmittel ausgewählt, die eine lösbare Verbindung der beiden Präsentationselemente 3 ermöglichen, wodurch die Präsentationselemente 3 gestapelt werden können und somit platzsparend lager- bzw. transportierbar sind. Mögliche Verbindungsmittel 15 sind Schraube, Stift, Klemme, Niet, Splint, Pin, Haken, Clips, Riegel, Spreizverbindungselement, Klettverschluss, oder dergleichen.

In einer alternativen Ausführungsform ist es auch möglich die beiden Präsentationselemente 3 durch Schweißen miteinander zu verbinden. Dadurch entsteht eine Verbindung, die sich über einen größeren Bereich erstreckt und daher sehr stabil ist. Diese Verbindung kann allerdings nicht gelöst werden und somit ist ein Auseinandernehmen und Stapeln der Präsentationselemente 3 für den Transport oder eine platzsparende Lagerung nicht möglich.

Der Randbereich 17 zweier an der Stirnseite aneinandergrenzender Halbschalenträger 16 ist annähernd satteldachförmig ausgebildet und bis nach oben hin geschlossen. Auf dem stirnseitig liegenden Randbereich 17 ist eine Fläche 19 angeordnet, auf der, gegebenenfalls in einer Einstecktasche bzw. Scannerleiste, Werbung oder eine Preisauszeichnung angebracht werden können.

In einer alternativen nicht dargestellten Ausführungsform kann anstelle des zweiten Präsentationselements 3 in Form eines Halbschalenträgers, insbesondere Bananentrays, auch ein Präsentationsbehälter in Form einer Kiste bzw. Box angeordnet sein, wobei sich die beiden Präsentationselemente einander gegenseitig abstützen. Somit können auf einem Präsentationssystem unterschiedliche Waren platziert werden.

Zudem kann beim erfindungsgemäßen Präsentationssystem 1 auf den Trägerring 4 ein Stabilisierungselement 9 mit einer Wiegeeinheit gesetzt werden. So kann das Gewicht bzw. Gewichtsveränderungen der darauf positionierten Präsentationselemente 3 bestimmt werden. Die Wiege- bzw. Wägezellen der Wiegeeinheit erfassen jede Einlagerung oder Entnahme von Waren aus dem Präsentationselement 3. Durch die Gewichtsbestimmung kann einerseits die Produktverfügbarkeit optimiert werden und andererseits die Warenabschriften reduziert werden.

Zur Gewichtsbestimmung bzw. -verfolgung können mehrere Stabilisierungselemente 9 übereinander angeordnet sein. Das erste unmittelbar auf den Trägerring 4 folgende Stabilisierungselement 9 dient zur Stabilisierung des Trägerrings 4. Darauf folgen zwei Stabilisierungselemente 9, wobei jedes der Stabilisierungselemente 9 entweder die erste oder zweiten Baugruppe der Wiegeeinheit aufweist. Das mittlere Stabilisierungselement 9 umfasst die erste Baugruppe, worauf die Wiegezellen angeordnet sind. Die erste Baugruppe ist als unterer Teil der Wiegeeinheit angeordnet. Es kann aber auch das Stabilisierungselement 9 mit der ersten Baugruppe der Wiegeeinheit direkt auf den Trägerring 4 gesetzt werden.

Die Wiegezellen sind auf einem plattenförmigen Element, das sich innerhalb des Rahmens des Stabilisierungselements 9 erstreckt, angeordnet. Die Wiegezellen können gleichmäßig verteilt auf dem plattenförmigen Element angeordnet sein. Vorzugsweise sind vier Wiegezellen angeordnet, wobei jeweils eine Wiegezelle im Bereich jeder Ecke des Stabilisierungselements 9 angeordnet ist.

Als Wiegezelle kann beispielsweise jene der Firma Bizerba^{®} oder Digi Sens AG verwendet werden. Es kann aber auch jede andere Wiegetechnik im Stabilisierungselement 9 enthalten sein.

Vorzugsweise ist das plattenförmige Element eine Platte aus Metall.

Auf dem plattenförmigen Element sind auch zwei Abstandhalter als Überlastungsschutz angeordnet. Es kann auch nur ein oder mehrere Abstandhalter angeordnet sein.

Die zweite Baugruppe der Wiegeeinheit ist auf dem obersten Stabilisierungselement 9 angebracht. Diese zweite Baugruppe umfasst ebenfalls ein Stabilisierungselement 9 und ein in diesem Stabilisierungselement angeordnetes flächenförmiges Element, welches ebenfalls als Platte ausgebildet sein kann. Dieses weitere plattenförmige Element ist vorzugsweise aus Kunststoff gebildet.

Das obere Stabilisierungselement 9 mit der zweiten Baugruppe der Wiegeeinheit darf mit dem unteren Stabilisierungselement 9 mit der ersten Baugruppe der Wiegeeinheit nicht in Berührung kommen, sodass keine Reibung entsteht und das Messergebnis nicht verfälscht wird.

Der Abstandhalter kann als Zylinder oder Quader entsprechend der Beabstandung der beiden plattenförmigen Elemente der beiden Stabilisierungselemente 9 mit der ersten und zweiten Baugruppe der Wiegeeinheit ausgebildet sein.

In einer bevorzugten Ausführungsform hat der Überlastungsschutz ein Spiel zur Metallplatte, damit er nicht sofort, also bei nur leichter Durchbiegung der Verstrebungen bzw. der plattenförmigen Elemente, aktiv wird. An welcher Stelle der Überlastungsschutz eingebaut wird bzw. wie groß das Spiel ist hängt vor allem davon ab, mit welchen Gewichten das Präsentationssystem 1 beladen wird und wie stark die maximale Belastung sein darf, auch abhängig von der maximalen Belastung der Wiegezellen.

Auf dem weiteren plattenförmigen Element des obersten Stabilisierungselements 9 wird zumindest ein Präsentationselement 3 platziert dessen Gesamtgewicht bzw. Gewichtsveränderung bestimmt wird.

Die zumindest eine Wiegeeinheit weist vorzugsweise Wiegezellen mit Sensoren auf, die eine Ent- bzw. Aufnahme eines Artikels aus/in das Präsentationselement erfasst und mit einer Auswerteeinheit verbunden sind und somit der Warendurchsatz verfolgt werden kann, ohne das Präsentationssystem 1 aufsuchen zu müssen. Die Wiegeeinheit wiegt das Präsentationselement 3 des Präsentationssystems 1 und durch die damit verbundene Auswerteeinheit wird errechnet wieviel Obst und Gemüse bzw. wie viele Waren noch in das Präsentationselement 1 enthalten sind und liefert ständig aktuelle und exakte Werte.

Anstelle die Waren ständig unter Einsatz einer Arbeitskraft zählen zu müssen, wird der Warenbestand gewogen. Aus dem Gesamtgewicht des Präsentationselements 3 und dem Stückgewicht kann die Auswerteeinheit die Anzahl der enthaltenen Teile ermitteln.

Die Wiegeeinheit wird vorzugsweise mittels Akkutechnik betrieben. Die Wiegezellen können beispielsweise mit auf dem plattenförmigen Element angebrachten Akkus betrieben werden. Somit ist es möglich das mobile Präsentationssystem 1 mehrere Tage autonom zu betreiben und währenddessen kein Warenverkehr stattfindet, insbesondere nachts, zu laden.

Im Sinne der Erfindung wird unter Stegplatte eine Platte aus zwei äußeren Schichten, insbesondere Wänden, welche zumindest eine Kernschicht begrenzen, verstanden. Vorzugsweise enthält die Kernschicht Stege, welche die beiden äußeren Schichten verbinden. Solche Stegplatten werden auch Hohlkammerplatte, Strukturkammerplatte, Strukturwabenplatte, bezeichnet. Stegplatten werden beispielsweise von der Firma Friedola Tech GmbH unter der Bezeichnung Con-Pearl Boards ^{®} oder der Firma Triplex Kunststoffe GmbH vertrieben. Sie können aus unterschiedlichen Materialien, wie Kunststoff, Karton, Holz, etc. oder einer Kombination aus zwei oder mehr Materialien gebildet sein.

Der Trägerring 4 ist vorzugsweise aus einem Kunststoff, wie z.B. Polypropylen, hergestellt und weist somit lebensmittelechte Eigenschaften auf. Zudem ist der Trägerring 4 feuchtigkeitsbeständig, was bei der Verwendung als Unterbau für Obst- und Gemüseboxen eine wichtige Rolle spielt, weil oft Feuchtigkeit aus den Boxen tropft bzw. die Verkaufsfläche befeuchtet werden, um Obst und Gemüse ein ansprechendes Ansehen zu verleihen.

In einer alternativen Ausführungsform kann der Trägerring 4 auch aus Karton, insbesondere Wellpappe, gebildet sein. Dies ermöglicht eine sehr kostengünstige Ausführungsform des Trägerrings 4 bzw. des gesamten Präsentationssystems 1.

In einer alternativen Ausführungsform ist es auch möglich den Trägerring 4 aus einer Platte herzustellen, welche Verstärkungselemente enthält aber nicht notwendigerweise als Stegplatte ausgebildet ist. Eine solche Platte kann aus Kunststoff hergestellt sein und Verstärkungselemente enthalten, die aus demselben Material wie die Platte gebildet sind, beispielsweise in Form von Rippen. Die Platte kann aber auch ein Verbund aus mehreren Materialien sein, wie z.B. ein Holzkunststoffverbund oder Verstärkungselemente aus einem anderen Material wie Glasfasern, Basaltfasern, Carbonfasern, etc. enthalten. Auch eine Kombination anderer Materialien ist möglich. Ferner kann die Platte auch aus mehreren Schichten gleichen oder unterschiedlichen Materials hergestellt sein.

Das Stabilisierungselement 9 ist vorzugsweise aus Kunststoff, insbesondere spritzgegossenem Kunststoff, hergestellt. Das Stabilisierungselement 9 kann aber auch aus anderen Materialien gefertigt sein, wie beispielsweise Holz, Metall, Verbundwerkstoffen, etc.

Zur Verstärkung des Stabilisierungselements 9, insbesondere in den Eckbereichen, kann zumindest ein Verstärkungselement angeordnet sein.

In einer Weiterbildung der Erfindung sind die Seitenwände 5 des Trägerrings 4 aus Stegplatten an den Ober- und/oder Unterkanten verschlossen, insbesondere verschweißt, wodurch Hygieneanforderungen im Lebensmittelbereich erfüllt werden können.

Es können auch mehrere gleichartige Stabilisierungselemente 9 übereinandergestapelt werden, um die gewünschte Präsentationsposition für die Ware in einem Präsentationselement 3 zu erzielen.

Das Stabilisierungselement 9 kann außer den standardmäßigen Grundmaßen 600 x 800 mm zur Präsentation von Präsentationselementen mit den Abmessungen 600 x 400 mm bzw. 800 x 1200 mm zur Präsentation von Präsentationselementen mit den Abmessungen 600 x 600 mm auch alle anderen Maße aufweisen. Vorzugsweise weist auch der Trägerring 4 eine Höhe von knapp 600 mm auf, damit er zusammengeklappt in das Stabilisierungselement 9, vorzugsweise welches als Bodenrahmen ausgebildet ist, eingelegt werden und platzsparend verstaut werden kann. Der Trägerring 4 kann aber in seiner Höhe an die entsprechende Präsentationsnotwendigkeit angepasst werden.

Das Stabilisierungselement 9 kann sowohl im Deckelbereich 7 als auch im Bodenbereich 6 bei Bedarf mit nützlichen Zusatzelementen, wie Preisleisten oder Produktinformationstafeln ausgestattet werden. Dabei wird beispielsweise die Preisleiste auf das Stabilisierungselement 9 aufgeklebt, aufgesteckt, geschoben, etc.

Am Trägersystem 4 und/oder Stabilisierungselement 9 können Verbindungselemente angeordnet sein, um eine stabile Verbindung mehrerer Präsentationssysteme 1 zu einer großen Präsentationsinsel zu ermöglichen.

Das Präsentationssystem 1 kann ohne Werkzeug, wie Zangen, Schraubenschlüssel, Schraubendreher, oder dgl., auf- und abgebaut werden und ist daher sehr einfach in der Handhabung.

Der Vorteil des mobilen Präsentationssystems 1 bzw. einer mobilen Präsentationsinsel besteht auch darin, dass es einfach zusammengeklappt und im Lager verstaut werden kann. Dazu muss nur das obere Stabilisierungselement 9 aus dem Trägerring 4 herausgezogen werden, gegebenenfalls das Verriegelungselement beim Trägerring 4 entriegelt werden und der Trägerring 4 kann einfach zusammengefaltet und gemeinsam mit dem Stabilisierungselement 9 vom Präsentationsplatz entfernt und weggetragen werden. Um eine ansprechende Optik des Präsentationssystems 1 zu erreichen, können bei der Anordnung mehrerer Präsentationssysteme 1 mit Stabilisierungselementen 9 mit Präsentationselementen 3 zu einer Insel, die Trägerringe 4 gleiche Höhen aufweisen, um somit eine große, in einer Flucht angeordnete Präsentationsfläche zu erreichen.

In der Fig. 2 und 3 ist eine weitere und gegebenenfalls für sich eigenständige Ausführungsform des Präsentationssystems 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Präsentationssystem
- 2: Trägersystem
- 3: Präsentationselement
- 4: Trägerring
- 5: Seitenwand
- 6: Bodenbereich
- 7: Deckelbereich
- 8: Faltbereich
- 9: Stabilisierungselement
- 10: Vorsprung
- 11: Rahmen
- 12: Rolle
- 13: Verriegelungselement
- 14: Verbindungselement
- 15: Verbindungsmittel
- 16: Halbschalenträger
- 17: Randbereich
- 18: Abschrägung
- 19: Fläche

## Patentansprüche

1. Präsentationssystem (1) umfassend ein Trägersystem (2) und zumindest ein Präsentationselement (3), wobei das Trägersystem (2) einen faltbaren Trägerring (4) mit Seitenwänden (5) aus Platten, insbesondere Stegplatten, mit einem Boden- und Deckelbereich (6, 7) sowie zumindest einen Faltbereich (8) und zumindest ein Stabilisierungselement (9), das rahmenartig ausgebildet ist, umfasst, wobei das Stabilisierungselement (9) auf den Seitenwänden (5) des faltbaren Trägerrings (4) im Boden- und/oder im Deckelbereich (6, 7) angeordnet ist, und das Stabilisierungselement (9) des Trägersystems (2) einen Vorsprung (10) zur Halterung des zumindest einen Präsentationselements (3) aufweist, **dadurch gekennzeichnet, dass** auf dem Stabilisierungselement (9) zumindest zwei Präsentationselemente (3) angeordnet sind, die in einem Winkel ausgewählt ist aus einem Bereich mit einer oberen Grenze von 150° und einer unteren Grenze von 40° einander gegenüberliegend angeordnet und miteinander verbunden sind, und dass zumindest ein Präsentationselement (3) durch zumindest einen Halbschalenträger (16) gebildet ist.

2. Präsentationssystem (1) nach Anspruch 1, **dadurch gekennzeichnet, dass** der Winkel annähernd 80° beträgt.

3. Präsentationssystem (1) nach Anspruch 1 oder 2, **dadurch gekennzeichnet, dass** die Verbindung der zumindest zwei Präsentationselemente (3) über zumindest ein Verbindungselement (14) erfolgt.

4. Präsentationssystem (1) nach Anspruch 3, **dadurch gekennzeichnet, dass** das zumindest eine Verbindungselement (14) eine annähernd dreieckige Form aufweist.

5. Präsentationssystem (1) nach einem der Ansprüche 3 oder 4, **dadurch gekennzeichnet, dass** das zumindest eine Verbindungselement (14) im Randbereich Vorsprünge, insbesondere annähernd pilzförmige Vorsprünge, zur Verbindung mit komplementären Ausnehmungen des zumindest einen Präsentationselement (3) aufweist oder umgekehrt.

6. Präsentationssystem (1) nach einem der Ansprüche 1 bis 5, **dadurch gekennzeichnet, dass** die Präsentationselemente (3), gegebenenfalls mit dem Verbindungselement (14) und/oder Stabilisierungselement (9), mit Verbindungsmitteln (15) ausgewählt aus einer Gruppe umfassend Schraube, Stift, Klemme, Niet, Splint, Pin, Haken, Clips, Riegel, Spreizverbindungselement und Klettverschluss verbunden sind.

7. Präsentationssystem (1) nach einem der Ansprüche 1 bis 6, **dadurch gekennzeichnet, dass** mehrere nebeneinander angeordnete Halbschalenträger (16) das Präsentationselement (3) bilden.

8. Präsentationssystem (1) nach einem der Ansprüche 1 bis 7, **dadurch gekennzeichnet, dass** das Präsentationselement (3) mit Halbschalen einen Randbereich (17) mit einer Abschrägung (18) aufweist.

9. Präsentationssystem (1) nach einem der Ansprüche 1 bis 8, **dadurch gekennzeichnet, dass** zwei einander gegenüberliegende Präsentationselemente (3) mit Halbschalen im Randbereich (17) mit der Abschrägung (18) ineinandergesteckt sind.

10. Präsentationssystem (1) nach einem der Ansprüche 1 bis 9, **dadurch gekennzeichnet, dass** im zumindest einen Halbschalenträger (16) Durchbrüche angeordnet sind.

## Claims

1. A display system (1) comprising a carrier system (2) and at least one display element (3), wherein the carrier system (2) comprises a foldable carrier ring (4) with side walls (5) made of panels, in particular web panels, with a base and cover region (6, 7) as well as at least one folding region (8) and at least one stabilizing element (9), which is configured to be frame-like, wherein the stabilizing element (9) is arranged on the side walls (5) of the foldable carrier ring (4) in the base and/or cover region (6, 7), and the stabilizing element (9) of the carrier system (2) has a projection (10) for holding the at least one display element (3), **characterized in that** at least two display elements (3) are arranged on the stabilizing element (9), which display elements (3) are arranged opposite one another at an angle selected from a range having an upper limit of 150° and a lower limit of 40° and are connected to one another, and that at least one display element (3) is formed by at least one half-shell carrier (16).

2. The display system (1) according to claim 1, **characterized in that** the angle is approximately 80°.

3. The display system (1) according to claim 1 or 2, **characterized in that** the at least two display elements (3) are connected via at least one connecting element (14).

4. The display system (1) according to claim 3, **characterized in that** the at least one connecting element (14) has an approximately triangular shape.

5. The display system (1) according to one of claims 3 or 4, **characterized in that** the at least one connecting element (14) has projections in the edge region, in particular approximately mushroom-shaped projections, for connection to complementary recesses of the at least one display element (3) or vice versa.

6. The display system (1) according to one of claims 1 to 5, **characterized in that** the display elements (3) are connected, optionally with the connecting element (14) and/or stabilizing element (9), with connecting means (15) selected from a group comprising screw, pin, clamp, rivet, cotter, pin, hook, clip, latch, expanding connecting element and hook and loop fastener.

7. The display system (1) according to one of claims 1 to 6, **characterized in that** multiple half-shell carriers (16) arranged next to each other form the display element (3).

8. The display system (1) according to one of claims 1 to 7, **characterized in that** the display element (3) with half-shells has an edge region (17) with a bevel (18).

9. The display system (1) according to one of claims 1 to 8, **characterized in that** two opposing display elements (3) with half shells are inserted into one another in the edge region (17) with the bevel (18).

10. The display system (1) according to one of claims 1 to 9, **characterized in that** cut-outs are arranged in the at least one half-shell carrier (16).

## Revendications

1. Système de présentation (1) comprenant un système de support (2) et au moins un élément de présentation (3), dans lequel le système de support (2) comprend un anneau de support pliable (4) avec des parois latérales (5) constituées de plaques, plus particulièrement des plaques d'entretoise, avec une partie de fond et une partie de couvercle (6, 7) ainsi qu'au moins une partie de pliage (8) et au moins un élément de stabilisation (9), qui est conçu sous la forme d'un cadre, dans lequel l'élément de stabilisation (9) est disposé sur les parois latérales (5) de l'anneau de support pliable (4) dans la partie de fond et/ou dans la partie de couvercle (6, 7) et l'élément de stabilisation (9) du système de support (2) présente une saillie (10) pour le maintien de l'au moins un élément de présentation (3), **caractérisé en ce que**, sur l'élément de stabilisation (9), sont disposés au moins deux éléments de présentation (3), qui sont disposés face à face et reliés entre eux avec un angle choisi dans un intervalle avec une limite supérieure de 150° et une limite inférieure de 40° et **en ce qu'**au moins un élément de présentation (3) est constitué d'au moins un support à demi-coque (16).

2. Système de présentation (1) selon la revendication 1, **caractérisé en ce que** l'angle est d'environ 80°.

3. Système de présentation (1) selon la revendication 1 ou 2, **caractérisé en ce que** la liaison entre les au moins deux éléments de présentation (3) a lieu par l'intermédiaire d'au moins un élément de liaison (14).

4. Système de présentation (1) selon la revendication 3, **caractérisé en ce que** l'au moins un élément de liaison (14) présente une forme approximativement triangulaire.

5. Système de présentation (1) selon l'une des revendications 3 ou 4, **caractérisé en ce que** l'au moins un élément de liaison (14) présente, dans la partie de bord, des saillies, plus particulièrement des saillies approximativement en forme de champignons, pour la liaison avec des évidements complémentaires de l'au moins un élément de présentation (3), ou inversement.

6. Système de présentation (1) selon l'une des revendications 1 à 5, **caractérisé en ce que** les éléments de présentation (3), le cas échéant avec l'élément de liaison (14) et/ou l'élément de stabilisation (9), sont reliés avec des moyens de liaison (15) sélectionnés dans un groupe comprenant : une vis, une goupille, une pince, un rivet, une clavette, une broche, un crochet, un clip, un verrou, un élément de liaison par écartement et une fermeture velcro.

7. Système de présentation (1) selon l'une des revendications 1 à 6, **caractérisé en ce que** plusieurs supports à demi-coques (16) juxtaposés constituent l'élément de présentation (3).

8. Système de présentation (1) selon l'une des revendications 1 à 7, **caractérisé en ce que** l'élément de présentation (3) avec les demi-coques présente une partie de bord (17) avec un chanfrein (18).

9. Système de présentation (1) selon l'une des revendications 1 à 8, **caractérisé en ce que** deux éléments de présentation (3) avec les demi-coques, disposés face à face, sont insérés l'un dans l'autre dans la partie de bord (17) avec le chanfrein (18).

10. Système de présentation (1) selon l'une des revendications 1 à 9, **caractérisé en ce que**, dans l'au moins un support à demi-coque (16), sont prévus des perçages.
